# EUROPEAN PATENT APPLICATION

(11) **EP 2 323 237 A2**
(43) Date of publication of application: **18.05.2011**
(21) Application number: 09075491.2
(22) Date of filing: 05.11.2009
(51) Int. Cl.: H02J 7/00, B60L 11/18

(54) **Electric vehicle charging station**

(30) Priority: 06.11.2008 GB 0820314
(71) Applicant: Russell, Wilson, 35005 Las Palmas de Gran Canaria (ES)
(72) Inventor: Russell, Wilson, 35005 Las Palmas de Gran Canaria (ES)

(57) **Abstract**

The present invention relates to on-street electric vehicle charging stations and in particular to electric vehicle charging stations that are secure, low cost and quick to install. A charging station 20 is supplied with power from an item of electrically powered street furniture such as a lamppost 10 and is either attached directly to the lamppost 10 or indirectly attached to an independent post 30 or inspection cover 27 or mounted into either the pavement 29 and/or the roadside 28 via a supply feed cable 22

## Description

The present invention relates to on-street electric vehicle charging stations, and in particular to electric vehicle charging stations that are secure, low cost and quick to install.

Electric vehicles such as cars and motorcycles are well known throughout the world as a method of clean transport that does not produce tailpipe emissions. With the rise in global warming, there is an increase in demand for vehicles that help to counter the problem of harmful emissions. Electric vehicles comprise an electric motor and a battery, which supplies the power to drive the electric motor to propel the vehicle along. The power in the battery only lasts for a certain amount of time before the battery has to be recharged, so an electricity charging point is required to recharge the battery. However, as electric vehicles need to charge for much longer periods of time than it takes to fill a tank of petrol, many such points would be required. These charging points would have to be distributed evenly throughout an area, and would be required at a far greater concentration than petrol stations. Ideally electric vehicles would charge at night time after daily use, which is also preferable in terms of carbon emissions and cost as the electricity is provided off-peak, but can also charge in the day time and make use of electricity generated by other clean sources such as solar. However, there is currently insufficient infrastructure in place to deal with charging electric vehicles on a mass scale, which does little for consumer confidence or market uptake.

The owners of electric vehicles that do not have a garage or driveway have very few options to charge their electric vehicles in the street so instead must run an electricity extension cable from their house out into the street, which is unacceptable in terms of health and safety. To overcome these problems, roadside charging points distributed evenly throughout every street in every city must be provided to make it convenient for an owner to charge their electric vehicle, including outside their own house. These charging stations may be linked to parking bays designated for electric vehicle use only.

Previously, a number of charging stations have been installed in car parks and on the roadside, especially in California when the major manufacturers trialled electric cars such as General Motors' EV1 in the 1990's. As most charging points require connection to the low voltage power grid, it is normal to dig up the pavement and/or the road to expose the low voltage electricity distribution cable, and use a known cable jointing technique to connect a low voltage service cable to this distribution cable to power the charging point. A further low voltage service cabinet or pillar is needed to terminate the low voltage service cable and provide a fuse box and isolating switch. Further, a steel or other suitable material pole is also required to display a sign to indicate a charging point from a distance. The charging station itself must then be provided, and as with the signpost and low voltage pillar or cabinet, the charging station must be secured into the ground, and require some form of road tar or cement to clean up the area and make good the pavement and/or the road surface . The resultant three items of street furniture required are unsightly, costly to install and may require separate planning permission.

The ground excavation, planning and disruption to the pavement traffic and potential road traffic can be troublesome and it can take several weeks for a number of different tradesmen to do each part of the process; a labourer will dig the holes, an experienced electrician will joint onto the electricity distribution cables, a labourer fills in the holes and installs the street furniture and the electrician connects the low voltage service cable to the charging point. A possible further tradesman is needed to mark the road with paint to indicate the charging point parking bay. In summary, a lot of planning and work may go into installing a single charging station in a street, making mass deployment a significant and costly task, also leading to an increase in unsightly street furniture.

The present invention addresses the problems of known charging stations by providing an electric charging station that is quick to install, reduces the number of planning applications required and reduces disruptions to pavement traffic and road users. The present invention cuts down on the amount of additional street furniture used in prior systems by making use of the existing street furniture in streets, such as lampposts and their existing connection to the low voltage distribution supply, from which an electric vehicle can be charged.

Therefore, according to the present invention there is provided an electric vehicle charging station that is supplied with electricity by an item of electrically powered street furniture.

According to a second aspect of the present invention there is provided a charging network comprising a series of items of electrically powered street furniture having electric vehicle charging stations, which are interconnected via an electricity supply network to supply electricity to electric vehicles.

The term "electrically powered street furniture" as used herein can describe any suitable item of street furniture that is supplied with electricity, Lampposts are conveniently and evenly spaced throughout streets to provide a relatively even distribution of light throughout the night, and as such these are the preferred item of street furniture for use with the present invention. Description will generally be made with reference to lampposts, but it is to be understood that other items of furniture (such as but not only road signs, parking meters and low voltage pillars) could just as easily suffice. By taking advantage of the even spread, distribution and existing connection into the low voltage distribution power supply of lampposts, it is relatively simple to attach a small and discrete electricity charging station to the lamppost and connect it into the existing electricity supply of the lamppost. Preferably, the electric vehicle charging station is physically connected and secured to a lamppost, or any other type of street furniture, by any suitable means.

Preferably, a cable is provided connected to the charging station which can be used to reach the electric vehicle.

In a preferred embodiment the electricity components of the charging station are connected to a removable item that forms part of the item of street furniture. Such a removable item can then be easily attached to or removed from the street furniture. The removable item may form part of the external surface of the street furniture and may have an inner face that is provided with means for connection to the electrical supply of the street furniture and an outer face which is provided with means for connecting to the electric vehicle. This allows such an item to be connected to the street furniture in such a way as to have the electronic components better protected but still permit connection to a vehicle. Preferably the removable item is an inspection cover, though conceivably the charging station could be attached to anywhere on the lamppost body.

If fitting the charging station to a part of the structure of the lamppost body, one or more holes may have to be drilled into the structure thereof, so that the charging station can be secured thereto and so that the electricity charging station's power supply cable can be wired to the electricity supply in the lamppost.

Forming holes in the lamppost may weaken the structure, which could be exploited by high wind or other objects that might stress the structure, thereby rendering it unsafe. These holes may also render the lamppost un able to meet the necessary certification required for safe installation. To counter this weakness in the structure, a suitably sized and shaped brace or reinforcing plate may be applied to the structure at the point of the hole, in such a way as to strengthen the structure around the hole. The brace or plate is preferably made from metal and welded to the structure using a form of welding, best suited to the type of metal used for the brace or plate. Of course, if the charging station's power cable is routed externally of the structure entering though the inspection cover, this negates the need for any holes to be drilled into the structure. As the inspection cover provides little or no support for the structure, drilling a hole in this cover provides a route into the lamppost without weakening the structure. The brace or plate could also be integrated into the charging station, so attachment of the charging station to the structure, could provide the necessary strengthening, without the need to install a further item.

Alternatively, the charging station could be attached to a different structure or post which is independent of the lamppost or other item of street furniture. This independent structure or post to which the charging station is attached will preferably draw its power from the street furniture.

Power from the lamppost is preferably distributed to the independent charging point by digging a small channel in the footpath from the independent structure or post, to the lamppost and wiring in through an opening at the base of the lamppost where the lamppost is connected to the electricity distribution network. By digging a channel into the pavement and/or road, the charging point could also be installed into the pavement or the road surface, leaving just an exposed socket, which is preferably housed in a watertight compartment. This would also minimise the trip hazard caused by a charging cable connected between the electric vehicle and the charging station.

Preferably, a hook or alternative supporting object is provided, preferably positioned at a height at, or above the electricity charging station, from which the charging cable can be hung to minimise the tripping hazard. The charging station is preferably positioned on the structure at such a height as to be comfortably operable by the users. This height could be around 1.5 meters above the ground but would depend on the average height of the male and female operators in that particular country. However, at these kind of heights and with outlets on the electric vehicle being in a variety of locations depending on manufacturer and model, the charging cable connecting the electric vehicle to the electricity charging station can hang low to the ground and create a trip hazard to pedestrians on the public highway. A hook or alternative supporting object placed at the same level or above the charging station permits the charging cable to be positioned around, at, or above head height, which minimises the obstruction significantly.

It is also possible that the charging station is actually built in the form of a post, negating the need to install a post and attach the charging station to the post.

So that the electric vehicle user will be aware of the presence of the electric vehicle charging station there will preferably be provided a display sign or other indication attached to or near the lamppost or low voltage pillar other item of street furniture.

The present invention cuts down the installation work needed and the extra associated street furniture required for bespoke electric vehicle charging stations, leading to reduced costs and installation time.

Optionally the electric vehicle charging stations of the present invention are provided with metering or payment means.

In order that it may be better understood, several embodiments of the present invention will now be described, by way of example only, with reference to the following drawings wherein:
Figure 1 shows a known lamppost and the connection to the electricity distribution network;
Figure 2 shows a low voltage termination board situated inside the lamppost of Figure 1;
Figure 3 shows the connection of the present invention to the electricity supply of the termination board inside the lamppost;
Figure 4 shows a first embodiment of an electric vehicle charging station attached to the lamppost structure along with a display sign;
Figure 5 shows in detail a hole in the lamppost of the embodiment of Figure 4;
Figure 6 shows the lamppost of Figures 4 and 5 with a brace or plate fitted over the hole;
Figure 7 shows a second embodiment of electric vehicle charging station connected to the lamppost inspection cover;
Figure 8 shows a third embodiment of electric vehicle charging station connected to an independent post;
Figure 9 shows a fourth embodiment of electric vehicle charging station connected to the roadside and/or walkway;
Figure 10 shows a prior art electric vehicle charging station with a charging cable connected between an electric vehicle and an electric vehicle charging station; and
**Figure 11** shows the electric vehicle charging station of Figures 4 to 6 connected to a lamppost and a charging cable connected between an electric vehicle and an electric vehicle charging station.

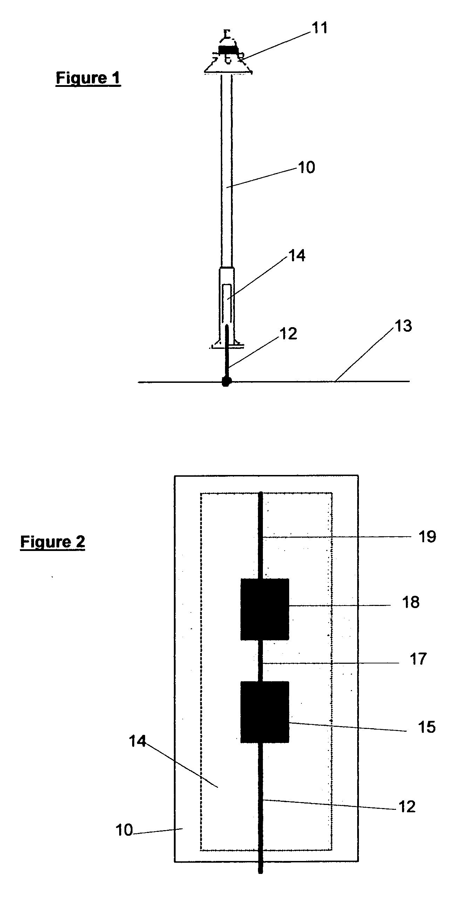

With reference to all of the Figures, but initially Figure 1 there is shown a lamppost 10 with a light 11 to which electricity is supplied by a low voltage service cable 12 which in turn is jointed onto an underground low voltage electricity distribution cable 13. The low voltage service cable 12 enters through the base of the lamppost 10 and is fed into a low voltage termination board 14. As shown in Figure 2, the low voltage service cable 12 enters the lamppost 10 and terminates on the low voltage termination board 14 via a low voltage isolation switch 15 which is connected using a short length of electricity cable 17 to a fuse 18. The fuse 18 connects to a further, longer length of electricity cable 19 that connects to the light and associated lighting components 11 at the top of the lamppost 10.

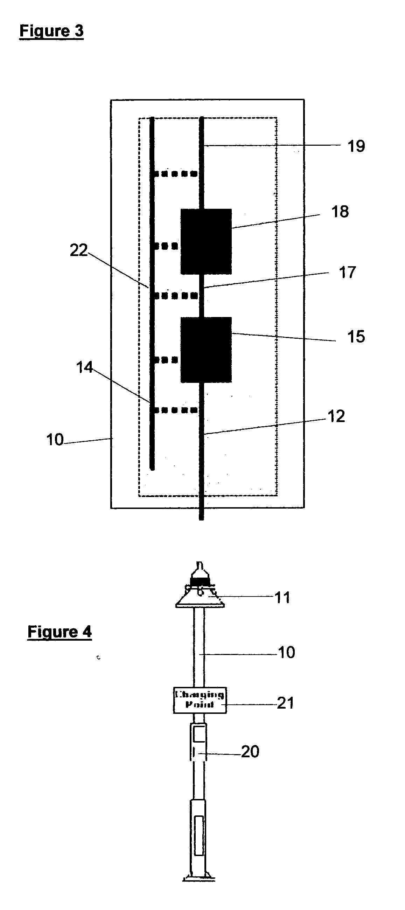

As shown by the broken lines in Figure 3, a charging station supply feed cable 22 is connected using known methods of jointing to the longer electricity cable 19, electricity cable 12 or shorter electricity cable 17, or is connected into the fuse 18 or isolation switch 15 in order for the charging station to receive electricity.

As shown in Figure 4, the lamppost 10 is provided with a display sign 21 to alert users to the presence of the charging station 20, which is attached to the lamppost 10 along with the display sign 21.

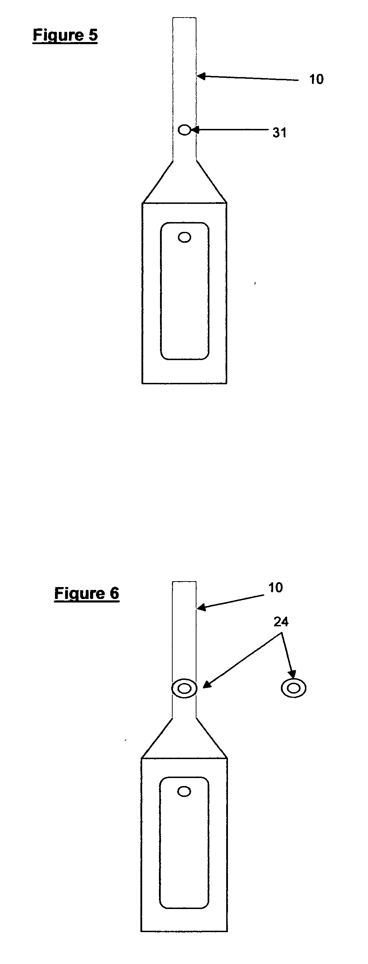

As shown in Figures 5 and 6, in this embodiment a hole 31 is drilled into the lamppost 10 so that a charging station 20 can be attached and connected to the electricity supply feed cable 22. So that the lamppost is not weakened by having a hole drilled into it, a brace or plate 24 is attached over the hole to strengthen it.

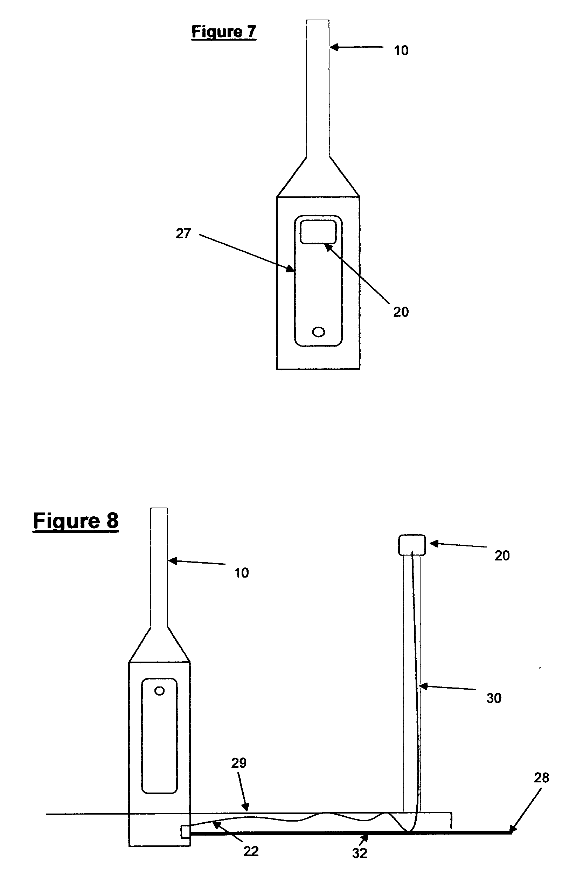

Figure 7 shows an alternative embodiment wherein the components of the charging station 20 are fitted to the inspection cover 27 on the lamppost 10. Such a replacement inspection cover can carry all electronic components (usually on the inside) required to convert an existing lamppost and a socket/connector such as transformers and connecters to interface with the supply to the lamppost. On the outside such a replacement inspection cover can carry means for connection to a vehicle for the charging. This would allow existing lampposts to be converted easily by replacing the inspection cover with a new one simply by taking of the old one and wiring in the new one.

In a third embodiment as shown in Figure 8, the charging station 20 is connected to a separate, independent post 30 which is mounted into the pavement 29. The charging station supply feed cable 22 is connected below the surface between the lamppost 10 and the independent post 30.

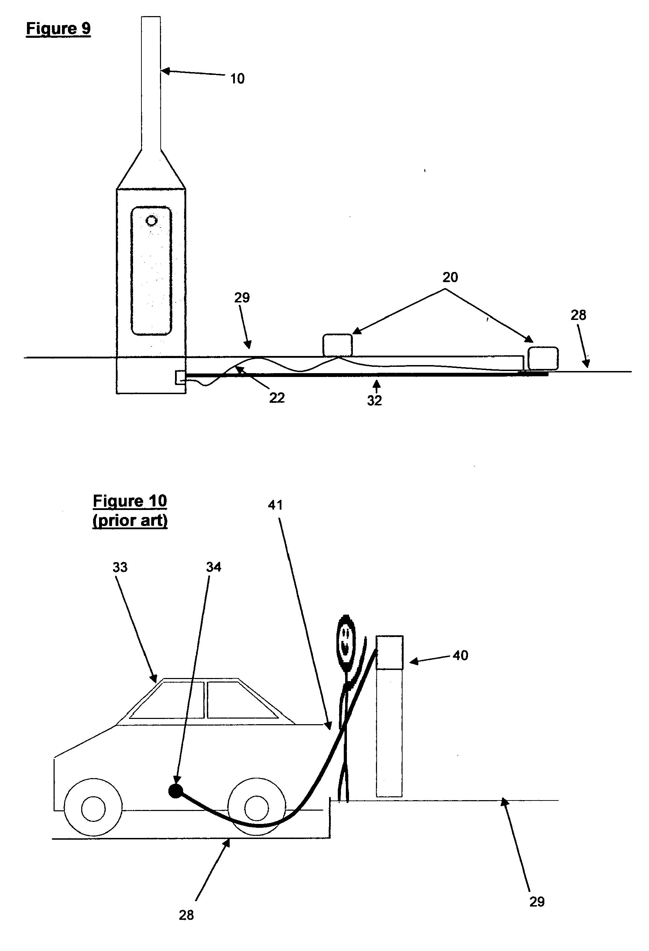

In a fourth embodiment as shown in Figure 9, the charging station 20 is mounted into either the pavement 29 and/or the roadside 28. The charging station supply feed cable 22 is connected between the lamppost 10 and the charging station 20 beneath the pavement surface.

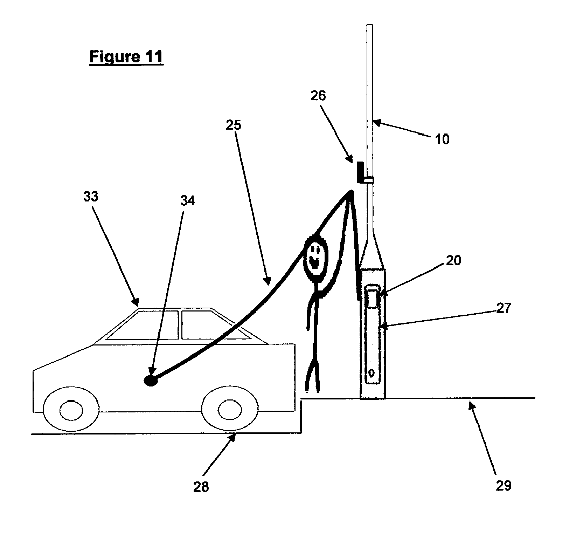

Figure 10, shows a prior art charging station 40, which has a charging cable 41 connected between a charging station 40 and an electric vehicle power inlet 34 on an electric vehicle 33. As previously described, this arrangement has the disadvantage of creating a tripping hazard, so as shown in Figure 11, the lamppost 10 of the present invention has a hook 26 attached which provides an elevated support for the charging cable 25 to connect between the charging station 20 and the electric vehicle 33.

## Claims

1. An electric vehicle charging station that is supplied with electricity by an item of electrically powered street furniture.

2. An electric vehicle charging station as claimed in claim 1, further comprising a cable for connecting an electric vehicle to the electricity supplied by the item of street furniture.

3. An electric vehicle charging station as claimed in claim 1 or claim 2 wherein the electric vehicle charging station is physically connected and secured to the electrically powered item of street furniture.

4. An electric vehicle charging station as claimed in claim 3, wherein the electricity components of the charging station are connected to a removable item that forms part of the item of street furniture.

5. An electric vehicle charging station as claimed in claim 4, wherein the removable item has an inner face that is provided with means for connection to the electrical supply of the street furniture and an outer face which is provided with means for connecting to the electric vehicle.

6. An electric vehicle charging station as claimed in claim 4 or claim 5, wherein the removable item is an inspection cover.

7. An electric vehicle charging station as claimed in claim 3, wherein the electricity charging station is connected to a permanent part of the structure of the item of street furniture.

8. An electric vehicle charging station as claimed in claim 7, wherein a hole or holes are formed in the structure of the item of street furniture through which the electric vehicle charging station is connected to the electricity supply.

9. An electric vehicle charging station as claimed in claim 8, wherein a brace or plate is applied to or around the hole, to strengthen the structure around the hole.

10. An electric vehicle charging station as claimed in claim 9, wherein the brace or plate forms part of the charging station and is applied to or around the hole, to strengthen the structure around the hole.

11. An electric vehicle charging station as claimed in any of the preceding claims, wherein the charging station is attached to a separate structure or post which is independent of the item of street furniture but which draws its power therefrom.

12. An electric vehicle charging station as claimed in any of the preceding claims, wherein the item of street furniture is a lamppost.

13. An electric vehicle charging station as claimed in any of the preceding claims, further provided with a display, sign or other indication attached to or near the item of street furniture to inform users of the presence of the charging station.

14. An electric vehicle charging station as claimed in any of the preceding claims, further provided with metering or payment means.

15. An electric vehicle charging station as claimed in claim 1 and as substantially herein described with reference to and as illustrated in the accompanying drawings.
